# EUROPÄISCHE PATENTANMELDUNG

(11) **EP 1 094 378 A1**
(43) Veröffentlichungstag der Anmeldung: **25.04.2001**
(21) Anmeldenummer: 00117567.8
(22) Anmeldetag: 16.08.2000
(51) Int. Cl.: G05D 23/13

(54) **Warm-/Kaltwasser-Mischarmatur mit Kurzumstellung**

(30) Priorität: 22.10.1999 DE 19950974
(71) Anmelder: Kludi Armaturen Scheffer Vertriebs- und Verwaltungs oHG, 58708 Menden (DE)
(72) Erfinder: Wiesendahl, Guido, Dipl.-Ing.(FH), 58313 Herdecke (DE)
(74) Vertreter: COHAUSZ HANNIG DAWIDOWICZ & PARTNER

(57) **Zusammenfassung**

Die Erfindung betrifft eine Warm-/Kaltwasser-Mischarmatur (1) insbesondere mit Thermostat (6) mit mindestens einem Bedienelement (7) zum Einstellen der Wassertemperatur durch Änderung des Verhältnisses der Warm-/Kaltwassermengen durch ein Ventilstellteil (5), das über Übertragungsmittel von Hand durch das Bedienelement verstellbar ist, wobei das Ventilstellteil (5) durch eine von der ersten Stellbewegung getrennte Bewegung in eine Stellung kurzzeitig bewegbar ist, in der das Mischungsverhältnis anders ist als das zuerst von Hand eingestellte und insbesondere vom Thermostat (6) kontrollierte.

## Beschreibung

Die Erfindung betrifft eine Warm-/Kaltwasser-Mischarmatur insbesondere mit Thermostat mit mindestens einem Bedienelement zum Einstellen der Wassertemperatur durch Änderung des Verhältnisses der Warm-/Kaltwassermengen durch ein Ventilstellteil, das über Übertragungsmittel von Hand durch das Bedienelement verstellbar ist.

Bei Warm-/Kaltwasser-Mischarmaturen mit Thermoelement ist es bekannt, innerhalb einer Kartusche ein Thermoelement anzuordnen, so daß die durch ein erstes Bedienelement eingestellte Mischtemperatur eingehalten wird. Insbesondere bei der Verwendung einer solchen Armatur für eine Dusche hat es sich gezeigt, daß der Wunsch besteht, die Armatur kurzzeitig auf eine andere Temperatur, insbesondere eine wesentlich niedrigere Temperatur von Hand einzustellen, um danach wieder auf die ursprünglich eingestellte Temperatur zurückzusteuern. Hierbei ist es schwierig, wieder exakt die erste Temperatur durch Handeinstellung zu erreichen. Ein solch kurzzeitiges Verstellen der Armatur ist besonders aus Abhärtungsgründen oder anderem gesundheitlichen Zweck gewünscht.

Aufgabe der Erfindung ist es, eine Warm-/Kaltwasser-Mischarmatur der Eingangs genannten Art so zu verbessern, daß bei einfacher Konstruktion nach einer kurzzeitigen Umstellung der Armatur von einer ersten eingestellten Temperatur zu einer zweiten es leicht möglich ist, wieder die erste Temperatur exakt zu erreichen.

Diese Aufgabe wird erfindungsgemäß dadurch gelöst, daß das Ventilstellteil durch eine von der ersten Stellbewegung getrennte Bewegung in eine Stellung kurzfristig bewegbar ist, in der das Mischungsverhältnis anders ist als das zuerst von Hand eingestellte und insbesondere vom Thermostat kontrollierte.

Durch eine solche Mischarmatur ist es möglich, nach Einstellen einer ersten Mischtemperatur eine zweite Temperatur einzustellen und danach mit Sicherheit wieder exakt die erste Temperatur zu erreichen. Herbei geschieht dies mit einfachsten technischen Mitteln.

Besonders vorteilhaft ist es hierbei, wenn die getrennte Bewegung durch das erste Bedienelement oder durch ein zweites Bedienelement als Verstellelement erzeugbar ist. Auch kann die zweite kurzzeitige Temperatur durch ein Einstellelement voreinstellbar sein.

Von besonderem Vorteil ist es, wenn innerhalb der Armatur ein zusätzliches Verstellelement angeordnet ist, das über Übertragungsmittel von Hand einstellbar ist und durch das kurzzeitig die Wasserzulaufmengen veränderbar sind, ohne die Einstellung des Ventilstellteils zu verändern, daß das Mischverhältnis bestimmt. Auch kann das Verstellelement auf das Ventilteil einwirken, daß das Verhältnis von Kalt- und Warmwasser steuert.

Vorzugsweise wird vorgeschlagen, daß das Verstellelement das Thermoelement, insbesondere das Dehnstoffelement direkt oder indirekt beaufschlagt. Auch ist es von Vorteil, wenn das Verstellelement mindestens eine der Federvorspannungen des Ventils direkt oder indirekt beeinflußt.

Eine besonders einfache Konstruktion wird erreicht, wenn das Verstellelement einen Stab aufweist, der koaxial in einer Hohlweite der Armatur sitzt und von Hand betätigbar ist. Auch ist von erheblichem Vorteil, wenn die von der ersten Stellbewegung getrennte Bewegung durchführbar ist, innerhalb einer Kartusche angeordnet sind, die auch das Ventilstellteil, das Bedienelement und das

Besonders vorteilhaft ist es, wenn eine Einrichtung vorgesehen ist, die selbsttätig zwischen den beiden Mischverhältnissen, bzw. Temperaturen wechselt. Hierbei kann der Umstellrhythmus des Wechselns insbesondere elektronisch wählbar sein.

Ein Ausführungsbeispiel der Erfindung ist in den Zeichnungen in einem axialen Schnitt dargestellt und wird im folgenden näher beschrieben. Es zeigen:
- Figur 1:: ein erstes Ausführungsbeispiel;
- Figur 2:: ein zweites Ausführungsbeispiel;

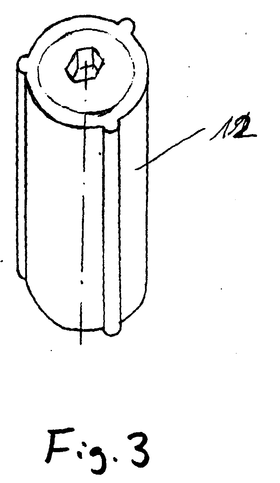

- Figur 3:: eine perspektivische Ansicht des Innenteils 12.

Innerhalb des Gehäuses 1 einer Kartusche befindet sich eine Mischkammer 2 in die eine Kaltwasserleitung 3 und eine Warmwasserleitung 4 münden. Innerhalb der Mischkammer 2 ist ein zur Kartuschenachse koaxial angeordnetes und axial verschiebliches Ventilstellteil 5 gelagert, dessen Stellung das Verhätnis von Kaltwasser zu Warmwasser bestimmt.

Das Ventilstellteil 5 ist in seiner Stellung durch ein Wachsdehnstoffelement 6 bestimmbar, das als Thermoelement wirkt. Hierbei ist das Wachsdehnstoffelement 6 durch ein Bedienelement 7 in seiner Stellung von Hand einstellbar, das koaxial zu einer Seite aus der Kartusche austritt und auf das am freien Ende ein nicht dargestellter Handgriff befestigbar ist. Das aus der Mischkammer 2 austretende Mischwasser gelangt auf der dem Bedienelement 7 gegenüberliegenden Seite zum Auslaß 8.

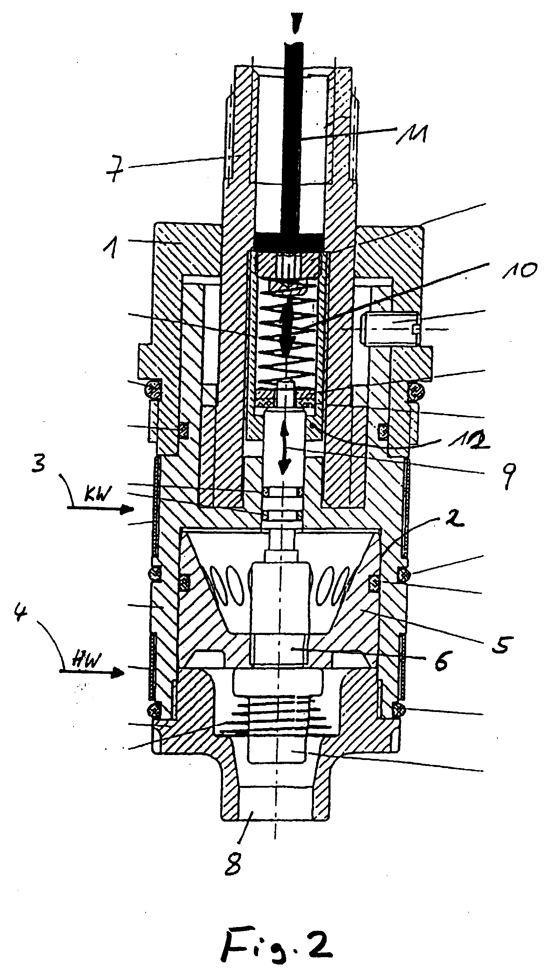

Daß das Ventilstellteil 5 bewegende Regelelement (Wachsdehnstoffelement) 6 arbeitet über eine Stange oder Kolben 9 gegen eine Schraubendruckfeder 10 an, die innerhalb des Innenraums des rohrförmigen Bedienelement 7 angeordnet ist. Ferner liegt innerhalb des Bedienelements 7 koaxial ein stangenförmiges Verstellelement 11 ein, das am Kolben 9 direkt oder über Zwischenteile 12 (siehe Figur 2) anliegt, und durch daß das Wachsdehnstoffelement 6 und/oder das Ventilstellteil 5 in der Weise beaufschlagbar ist, daß durch das Verstellelement 11 das Ventilstellteil so lange in eine andere Stellung bewegt werden kann, als die Stellung, die durch das Bedienelement 7 und das Wachsdehnstoffelement 6 ursprünglich bestand.

Weiterhin ist es möglich, hier eine Einrichtung vorzusehen, die automatisch zwischen den beiden Temperaturen wechselt und dessen Umstellrythmus wählbar ist, insbesondere elektronisch gesteuert.

Am äußersten Ende des Verstellelements 11 befindet sich ein nicht dargestellter Handgriff, oder ein von Hand betätigbarer Knopf, durch den über das Verstellelement 11 das Ventilstellteil kurzzeitig in eine Lage beweglich ist, die von der vorherigen Lage unterschiedlich ist. Hierdurch wird erreicht, daß aus dem Außlaß 8 so lange ein Mischwasser mit einer von der ursprünglichen Temperatur abweichenden Temperatur insbesondere einer tieferen Temperatur fließt, wie das Verstellelement betätigt wird. Sobald mit der Betätigung des Verstellelements 11 aufgehört wird, insbesondere dieses nicht mehr eingedrückt wird, gelangt das Ventilstellteil 5 wieder in seine ursprüngliche Lage, so daß die vorher eingestellte Temperatur wieder exakt erreicht wird.

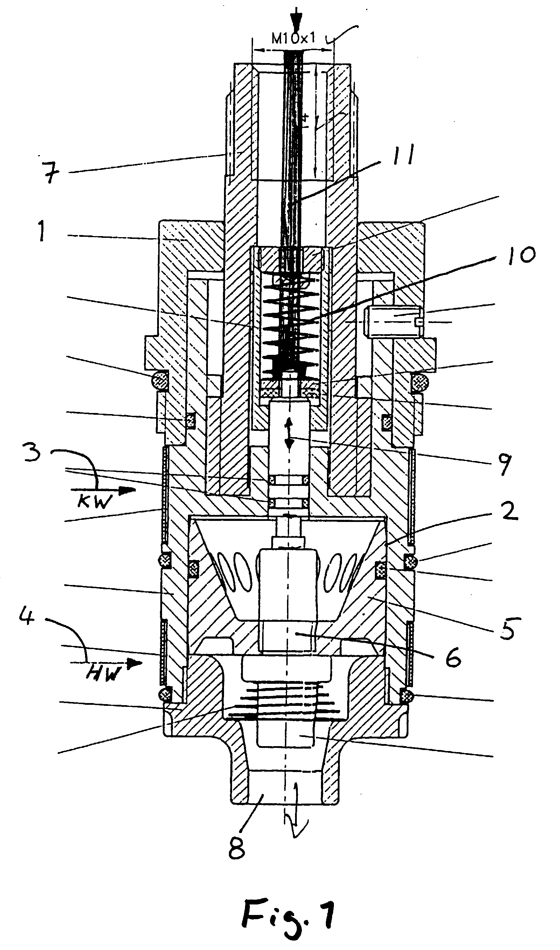

In dem Innenraum des Bedienelements 7 liegt ein zylindrisches Innenteil 12 ein, das in der Ausführung nach Figur 1 mit seinem Außengewinde in ein Innengewinde des Innenraums eingreift. Durch Verdrehen des Teils 12 kann eine gewünschte Temperatur voreingestellt werden. Innerhalb des Teils 12 liegt eine Schraubendruckfeder 10, durch die, über den Kolben 9 das Ventilstellteil 5 in eine Stellung fahrbar ist, in der das Heißwasser abgesperrt ist, wenn das Kaltwasser ausfällt.

In der Ausführung nach Figur 2 ist das Teil 12 ohne Außengewinde. Hierbei liegt am Teil 12 an seiner Außenseite das Verstellelemt 11 an, durch daß das Teil 12 axial verschieblich ist, um über den Kolben 9 das Verstellteil 5 zu verstellen und hierdurch die zweite Temperatur kurzzeitig einzustellen.

In einer nicht dargestellten Ausführung ist innerhalb oder außerhalb der Kartusche ein Einstellelement angeordnet, durch das die durch das Verstellelement 11 erzeugte und gewünschte kurzzeitige, abweichende Temperatur voreinstellbar ist. Ferner kann das Verstellement, oder ein mit dem Verstellelement verbundenes Teil eine Rasteinrichtung besitzen, durch die das Verstellelement so lange rastend gehalten ist, wie die abweichende Temperatur gewünscht wird.

## Patentansprüche

1. Warm-/Kaltwasser-Mischarmatur insbesondere mit Thermostat (6) mit mindestens einem Bedienelement (7) zum Einstellen der Wassertemperatur durch Änderung des Verhältnisses der Warm-/Kaltwassermengen durch ein Ventilstellteil (5), das über Übertragungsmittel von Hand durch das Bedienelement (7) verstellbar ist, **dadurch gekennzeichnet,** daß das Ventilstellteil (5) durch eine von der ersten Stellbewegung getrennte Bewegung in eine Stellung kurzzeitig bewegbar ist, in der das Mischungsverhältnis anders ist als das zuerst von Hand eingestellte und insbesondere vom Thermostat (6) kontrollierte.

2. Armatur nach Anspruch 1, **dadurch gekennzeichnet,** daß die getrennte Bewegung für das zweite Mischungsverhältnis durch das erste Bedienelement (7) oder durch ein zweites Bedienelement als Verstellelement (11) erzeugbar ist.

3. Armatur nach Anspruch 1 oder 2, **dadurch gekennzeichnet,** daß die zweite kurzzeitige Temperatur durch ein Einstellelement voreinstellbar ist.

4. Armatur nach einem der vorherigen Ansprüche, **dadurch gekennzeichnet,** daß innerhalb der Armatur ein zusätzliches Verstellelement (11) angeordnet ist, das über Übertragungsmittel von Hand einstellbar ist und durch das kurzzeitig die Wasserzulaufmengen veränderbar sind, ohne die Einstellung des Bedienelements 7 zu verändern, daß das Mischverhältnis bestimmt.

5. Armatur nach einem der vorherigen Ansprüche, **dadurch gekennzeichnet,** daß das Verstellelement (11) auf das Ventilteil einwirkt, daß das Verhältnis von Kalt- zu Warmwasser steuert.

6. Armatur nach einem der vorherigen Ansprüche, **dadurch gekennzeichnet,** daß das Verstellelement (11) das Thermoelement (6), insbesondere das Dehnstoffelement direkt oder indirekt beaufschlagt.

7. Armatur nach einem der vorherigen Ansprüche, **dadurch gekennzeichnet,** daß das Verstellelement (11) mindestens eine der Federvorspannungen des Ventils direkt oder indirekt beeinflußt.

8. Armatur nach einem der vorherigen Ansprüche, **dadurch gekennzeichnet,** daß das Verstellelement (11) einen Stab aufweist, der koaxial in einer Hohlwelle der Armatur sitzt und von Hand betätigbar ist.

9. Armatur nach einem der vorherigen Ansprüche, **dadurch gekennzeichnet,** daß die Teile (11), durch die die von der ersten Stellbewegung getrennte Bewegung durchführbar ist, innerhalb einer Kartusche angeordnet sind, die auch das Ventilstellteil (5), das Bedienelement (7) und das Thermoelement (6) enthält.

10. Armatur nach einem der vorherigen Ansprüche, **dadurch gekennzeichnet,** daß das zweite Mischungsverhältnis durch einen Thermostat geregelt ist.

11. Armatur nach einem der vorherigen Ansprüche, **dadurch gekennzeichnet**, daß eine Einrichtung vorgesehen ist, die selbsttätig zwischen den beiden Mischungsverhältnissen, bzw. Temperaturen wechselt.

12. Armatur nach Anspruch 1, **dadurch gekennzeichnet**, daß der Umstellrythmus des Wechselns insbeondere elektronisch wählbar ist.
